# FASCICULE DE BREVET EUROPEEN

(11) **EP 3 034 389 B1**
(45) Date de publication et mention de la délivrance du brevet: **01.05.2019**
(21) Numéro de dépôt: 15200852.0
(22) Date de dépôt: 17.12.2015
(51) Int. Cl.: B63B 35/50, G02B 27/01

(54) **PLATEFORME NAVALE ÉQUIPÉE D'UNE ZONE AVIATION NOTAMMENT POUR LA MISE EN OEUVRE D'UN DRONE**
MARINEPLATTFORM, DIE MIT EINER FLUGZONE AUSGESTATTET IST, INSBESONDERE FÜR DEN EINSATZ EINER DROHNE
NAVAL PLATFORM WITH AN AVIATION AREA FOR EXAMPLE FOR OPERATING A DRONE

(30) Priorité: 17.12.2014 FR 1402888
(43) Date de publication de la demande: 22.06.2016
(73) Titulaire: NAVAL GROUP, 75015 Paris (FR)
(72) Inventeur: MORESVE, Julien, 56700 HENNEBONT (FR); MATHIEU, Benoît Pierre Henri, 56260 LARMOR PLAGE (FR); LE GUEN, Pierre-Yves André, 56100 LORIENT (FR)
(74) Mandataire: Lavoix

(56) Documents cités:
- EP-A1- 2 666 709
- WO-A1-93/06511
- WO-A1-2010/072996
- DE-A1-102007 050 246

## Description

La présente invention concerne une plateforme navale telle que notamment un navire de surface.

Plus particulièrement, l'invention se rapporte à une plateforme navale comportant une zone aviation comprenant au moins une zone de décollage/appontage pour la mise en oeuvre d'un aéronef.

En particulier cet aéronef peut être un drone piloté à distance par un pilote à partir d'un poste de pilotage donnant sur la zone de décollage/appontage de la zone aviation de la plateforme et sur l'environnement de celle-ci. On sait que les phases d'appontage et de décollage des aéronefs et en particulier des drones, sont des phases critiques qu'il convient de sécuriser au maximum en raison des risques pour le personnel et le matériel.

En particulier la mise en oeuvre de drones sur une plateforme navale par exemple de surface, comprend des phases critiques d'appontage et de décollage qui sont actuellement réalisées en mode manuel par le pilote.

Ceci se fait alors actuellement par exemple à partir du poste de pilotage du drone à l'aide de moyens de commande tels que des leviers, des boutons, des manettes... et de moyens d'affichage d'informations tels qu'un moniteur.

En fait les informations délivrées au pilote sont affichées par l'intermédiaire d'interfaces homme/machine sur un moniteur raccordé au reste du système de pilotage à distance de ce drone.

On conçoit la complexité de ces interfaces en raison de la multiplicité des informations à délivrer.

De plus le visuel du pilote dans ces phases critiques ne lui permet pas toujours de déterminer précisément la position et l'état de l'aéronef notamment dans un environnement naval.

Le problème est actuellement traité en faisant appel à la qualité du pilote c'est-à-dire notamment son expérience et son ressenti.

Celui-ci estime les conditions d'appontage et de décollage ainsi que la position du drone pour effectuer les opérations d'approche ou d'éloignement en toute sécurité par exemple.

Des systèmes d'aide à l'appontage d'un aéronef tel qu'un drone ou un avion, sont connus par exemple des documents DE 10 2007 050246 et WO 2010/072996.

Le but de l'invention est de proposer des aides à la navigation et au pilotage du drone pour faciliter le travail du pilote et améliorer encore la sécurité de mise en oeuvre de ce type d'engins, notamment par gros temps.

A cet effet l'invention a pour objet une plateforme navale du type comportant une zone aviation comprenant au moins une zone de décollage/appontage d'un aéronef et en particulier d'un drone piloté à distance à partir d'un poste de pilotage correspondant donnant sur la zone de décollage/appontage de la zone aviation de la plateforme et sur l'environnement de celle-ci, caractérisée en ce que le poste de pilotage est équipé d'un système de superposition sur la vision de l'environnement de la plateforme, d'informations de navigation du drone par rapport à la zone de décollage/appontage, pour aider au pilotage de ce drone à partir du poste de pilotage.

Selon d'autres caractéristiques de la plateforme suivant l'invention, prises seules ou en combinaison :
- le système de superposition comporte un afficheur tête haute ;
- les informations de navigation sont choisies dans le groupe comprenant des informations :
   - de vitesse,
   - d'altitude,
   - de distance,
   - de roulis,
   - d'estimation du moment d'appontage,
   - d'horizon artificiel,
   - de conditions météorologiques dans la zone,
   - de limite de la zone de décollage/appontage,
   - de cercle de poser de la zone,
   - de projection du point de poser du drone sur la zone ;
- les informations affichées sont choisies en fonction de la distance entre le drone et la plateforme ;
- les informations affichées sont choisies en fonction de la distance correspondant à une phase d'approche lointaine du drone, une phase d'approche courte du drone et une phase d'approche finale du drone au-dessus de la zone de décollage/appontage.

L'invention sera mieux comprise à l'aide de la description qui va suivre donnée uniquement à titre d'exemple et faite en se référant aux dessins annexés sur lesquels :
- la figure 1 représente une vue en perspective arrière d'une plateforme navale comportant une zone aviation ; et
- les figures 2, 3 et 4 représentent différentes vues délivrées à un pilote d'un drone selon la distance entre le drone et la plateforme.

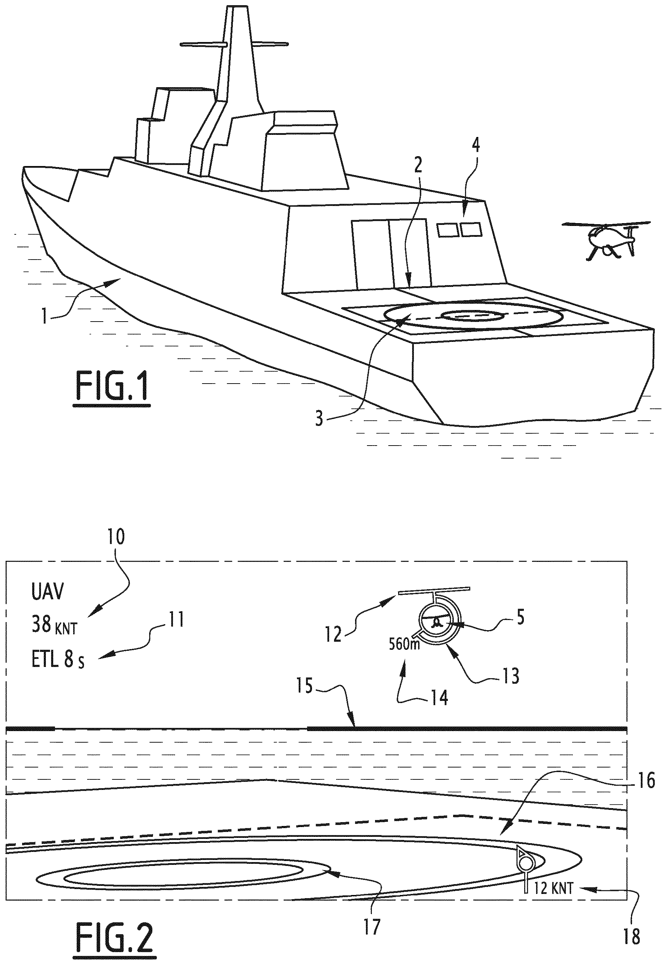

On a en effet illustré sur ces figures et en particulier sur la figure 1, une plateforme navale telle qu'un navire de surface.

Celle-ci est par exemple formée par une frégate par exemple du type multi missions bien connue, désignée par la référence générale 1 sur la figure 1 et qui comporte une zone aviation désignée par la référence générale 2.

Bien entendu d'autres plateformes que des frégates peuvent être envisagées.

La zone aviation 2 de cette plateforme comprend au moins une zone de décollage/appontage d'un aéronef tel qu'un hélicoptère ou encore un drone par exemple à voilure tournante piloté à distance.

Cette zone de décollage/appontage est désignée par la référence générale 3 sur cette figure 1.

Cette zone de décollage/appontage 3 est associée à un local de contrôle/commande des opérations également appelé local aviation, donnant par exemple par l'intermédiaire de hublots, sur la zone de décollage/appontage de la zone aviation de la plateforme et sur l'environnement de celle-ci.

Ce local aviation est désigné par la référence générale 4 sur la figure 1.

Il est par exemple situé sur l'un des côtés d'un hangar aviation de la plateforme, dont la porte arrière est illustrée sur cette figure 1.

On conçoit alors que le contrôle des opérations aériennes sur et dans la zone aviation peut être opéré à partir de ce local aviation par le personnel correspondant.

En particulier, et dans le cas où un drone piloté à distance est mis en oeuvre à partir de la plateforme, le poste de pilotage correspondant et le pilote peuvent être installés dans ce local aviation notamment pour les phases critiques lorsque le drone est à proximité de la plateforme par exemple en phase d'approche pour un atterrissage sur celle-ci.

Sur les figures 2, 3 et 4, on a représenté des vues de la zone aviation et de l'environnement telles que perçues notamment par le pilote, à partir de ce local aviation.

En particulier ce sont les vues que le pilote peut avoir à travers les hublots (ou châssis-vitrés) de ce local tels qu'on peut les voir sur la figure 1.

Le poste de pilotage du drone dans le local aviation est alors équipé d'un système de superposition sur la vision de l'environnement de la plateforme, d'informations de navigation et d'aide au pilotage du drone notamment par rapport à la zone de décollage/appontage de la plateforme, pour aider au pilotage de ce drone à partir du poste de pilotage du local aviation de la plateforme.

Dans l'exemple décrit le système de superposition comporte un afficheur tête haute.

Ainsi il est possible de présenter au pilote du drone des informations de navigation choisies dans le groupe comprenant des informations :
- de vitesse,
- d'altitude,
- de distance,
- de roulis,
- d'estimation du moment d'appontage,
- d'horizon artificiel,
- de conditions météorologiques dans la zone,
- de la limite de la zone de décollage/appontage,
- du cercle de poser de la zone,
- de projection du point de poser du drone sur la zone, etc.

En fait et comme cela est illustré, les informations affichées peuvent être choisies en fonction de la distance entre le drone et la plateforme.

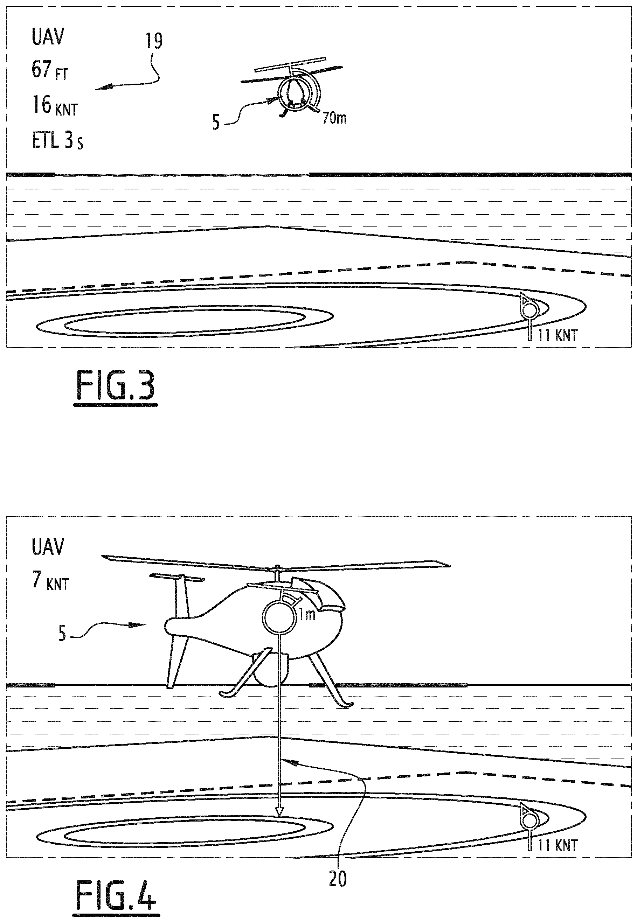

Ainsi par exemple les informations affichées sont choisies en fonction de la distance et correspondant par exemple à trois phases distinctes dont une phase d'approche lointaine du drone telle qu'illustrée sur les figures 2, une phase d'approche courte du drone telle qu'illustrée sur la figure 3 et une phase d'approche finale du drone au-dessus de la zone de décollage/appontage de la plateforme, telle qu'illustrée sur la figure 4.

Bien entendu d'autres façons de découper l'espace peuvent être envisagées.

Sur ces figures 2, 3 et 4, le drone est désigné par la référence générale 5.

Il grossit au fur et à mesure qu'il s'approche de la plateforme comme cela est illustré sur cette séquence de vues.

Ainsi sur la figure 2, des informations d'aide au pilotage en phase d'approche lointaine sont superposées sur la vue de l'environnement du pilote.

Ainsi par exemple sur cette figure 2, on voit apparaître:
- une information de vitesse du drone désignée par la référence générale 10 sur cette figure,
- une information d'estimation du moment de l'appontage désignée par la référence générale 11 (également connue sous le nom d'ETL pour « Estimated Time Landing »),
- un symbole représentant l'aéronef avec une indication de roulis de l'aéronef désignés par la référence générale 12,
- un réticule de distance désigné par la référence générale 13,
- la distance par rapport à la zone d'appontage désignée par la référence générale 14,
- une information d'horizon artificiel désignée par la référence générale 15,
- des limites de la zone d'appontage désignées par la référence générale 16,
- un cercle de poser désigné par la référence générale 17, par exemple autour d'une grille d'appontage de la zone, et
- des informations de conditions météorologiques telles que par exemple les conditions de vent en orientation et vitesse, désignées par la référence générale 18.

Toutes ces informations peuvent être utiles au pilote pour gérer au mieux l'approche lointaine du drone.

Bien entendu d'autres informations peuvent être envisagées.

Lorsque le drone arrive en phase d'approche courte, certaines informations peuvent être conservées et des informations complémentaires et/ou différentes peuvent être affichées.

Ainsi par exemple l'altitude du drone peut également être affichée en 19.

En phase d'approche finale au-dessus du pont de la plateforme et de la zone d'appontage, une barre d'altitude et de projection de sa position sur le pont c'est-à-dire du point de poser du drone peut également être affichée comme cela est désigné par la référence générale 20 sur cette figure 3.

Il va de soi bien entendu que d'autres modes d'affichage et d'autres informations encore peuvent être envisagés.

Ainsi on peut utiliser un miroir semi-transparent situé entre l'oeil du pilote et l'environnement extérieur et sur lequel sont projetées ces informations.

Ces informations sont alors dans le même champ de vision que le pilote et collimatées à l'infini.

Bien entendu différents modes de réalisation encore de cette plateforme peuvent être envisagés.

## Revendications

1. Plateforme navale du type comportant une zone aviation (2) comprenant au moins une zone de décollage/appontage (3) d'un aéronef et en particulier d'un drone (5) piloté à distance à partir d'un poste de pilotage correspondantdonnant sur la zone de décollage/appontage de la zone aviation de la plateforme et sur l'environnement de celle-ci, **caractérisée en ce que** le poste de pilotage est équipé d'un système de superposition sur la vision de l'environnement de la plateforme, d'informations de navigation du drone (5) par rapport à la zone de décollage/appontage (3), pour aider au pilotage de ce drone à partir du poste de pilotage.

2. Plateforme selon la revendication 1, **caractérisée en ce que** le système de superposition comporte un afficheur tête haute.

3. Plateforme selon la revendication 1 ou 2, **caractérisée en ce que** les informations de navigation sont choisies dans le groupe comprenant des informations :
- de vitesse,
- d'altitude,
- de distance,
- de roulis,
- d'estimation du moment d'appontage,
- d'horizon artificiel,
- de conditions météorologiques dans la zone,
- de limite de la zone de décollage/appontage,
- de cercle de poser de la zone,
- de projection du point de poser du drone sur la zone.

4. Plateforme selon la revendication 3, **caractérisée en ce que** les informations affichées sont choisies en fonction de la distance entre le drone (5) et la plateforme (1).

5. Plateforme selon la revendication 4, **caractérisée en ce que** les informations affichées sont choisies en fonction de la distance correspondant à une phase d'approche lointaine du drone, une phase d'approche courte du drone et une phase d'approche finale du drone au-dessus de la zone de décollage/appontage.

## Patentansprüche

1. Schiffsplattform vom Typ, welcher eine Flugzone (2) aufweist, welche mindestens eine Zone zum Starten/Landen (3) eines Luftfahrzeugs und insbesondere von einer Drohne (5), welche von einer zugehörigen Kontrollstation, die hin zur Zone zum Starten/Landen der Flugzone der Plattform und dessen Umgebung gerichtet ist, aus ferngesteuert wird, aufweist, **gekennzeichnet dadurch, dass** die Kontrollstation mit einem System zur Superposition, über das Bild der Umgebung der Plattform, von Informationen zur Navigation der Drohne (5) bezüglich der Zone zum Starten/Landen (3) ausgestattet ist, um bei der Steuerung der Drohne von der Kontrollstation aus zu unterstützen.

2. Plattform gemäß dem Anspruch 1, **gekennzeichnet dadurch, dass** das System zur Superposition eine Head-Up-Anzeige aufweist.

3. Plattform gemäß dem Anspruch 1 oder 2, **gekennzeichnet dadurch, dass** die Informationen zur Navigation aus der Gruppe ausgewählt sind, welche aufweist die Informationen über:
- eine Geschwindigkeit,
- eine Flughöhe,
- eine Distanz,
- ein Rollen,
- eine Schätzung über den Zeitpunkt der Landung,
- einen künstlichen Horizont,
- meteorologische Bedingungen in der Zone,
- eine Begrenzung der Zone zum Starten/Landen,
- einen Kreis zum Aufsetzen der Zone,
- eine Projektion des Aufsetzpunkts der Drohne auf der Zone.

4. Plattform gemäß dem Anspruch 3, **gekennzeichnet dadurch, dass** die angezeigten Informationen in Abhängigkeit von dem Abstand zwischen der Drohne (5) und der Plattform (1) ausgewählt sind.

5. Plattform gemäß dem Anspruch 4, **gekennzeichnet dadurch, dass** die angezeigten Informationen in Abhängigkeit von dem Abstand, welcher mit einer entfernten Anflugphase der Drohne, einer kurzen Anflugphase der Drohne und einer finalen Anflugphase der Drohne über der Zone zum Starten/Landen korrespondiert, ausgewählt sind.

## Claims

1. Naval platform of the type having an aviation zone (2) comprising at least one take-off/landing zone (3) for an aircraft and in particular for a drone (5) remotely piloted from a corresponding pilot station overlooking the take-off/landing zone of the aviation zone of the platform and the area surrounding the platform, **characterised in that** the pilot station is equipped with a system for superposing, on the view of the area surrounding the platform, navigation information for the drone (5) relative to the take-off/landing zone (3), in order to assist with the piloting of the drone from the pilot station.

2. Platform according to claim 1, **characterised in that** the superposition system comprises a head-up display.

3. Platform according to claim 1 or 2, **characterised in that** the navigation information is chosen from the group comprising the following information:
- speed,
- altitude,
- distance,
- roll,
- estimation of the landing time,
- artificial horizon,
- meteorological conditions in the zone,
- limit of the take-off/landing zone,
- landing circle of the zone,
- projection of the landing point of the drone on the zone.

4. Platform according to claim 3, **characterised in that** the displayed information is chosen in dependence on the distance between the drone (5) and the platform (1).

5. Platform according to claim 4, **characterised in that** the displayed information is chosen in dependence on the distance corresponding to a long approach phase of the drone, a short approach phase of the drone and a final approach phase of the drone above the take-off/landing zone.
